# EUROPÄISCHE PATENTSCHRIFT

(11) **EP 1 307 084 B1**
(45) Veröffentlichungstag und Bekanntmachung des Hinweises auf die Patenterteilung: **01.03.2006**
(21) Anmeldenummer: 01967225.2
(22) Anmeldetag: 27.07.2001
(51) Int. Cl.: A01C 7/04

(54) **MESSSYSTEM**
MEASURING SYSTEM
SYSTEME DE MESURE

(30) Priorität: 03.08.2000 US 632182
(43) Veröffentlichungstag der Anmeldung: 07.05.2003
(73) Patentinhaber: DEERE & COMPANY, Moline, Illinois 61265-8098 (US)
(72) Erfinder: KEATON, Miles, Raymond, Rock Island, IL 61201 (US); RYLANDER, David, James, Victoria, IL 61485 (US)
(74) Vertreter: Holst, Sönke
(86) Internationale Anmeldenummer: PCT/EP2001/008729
(87) Internationale Veröffentlichungsnummer: WO 2002/011520

(56) Entgegenhaltungen:
- US-A- 3 347 426
- US-A- 3 731 842
- US-A- 3 773 224

## Beschreibung

Die Erfindung betrifft ein Messsystem mit einem Beschleuniger gemäß dem Oberbegriff des Anspruchs 1.

Reihenpflanzgeräte sind in der Lage, Saatgut exakt zuzumessen und in einer Säfurche abzulegen. Typische Reihenpflanzgeräte werden nicht bei Pflanzgeschwindigkeiten beschrieben, die zehn Kilometer pro Stunde überschreiten. Bei höheren Geschwindigkeiten ist das Saatgut in der Furche nicht gleichmäßig beabstandet. Dieses Abstandsproblem kann teilweise auf das Saatgutrohr zurückgeführt werden, in das zugemessenes Saatgut abgelegt wird und durch das es in die Säfurche fällt. Während das Saatgut durch das Saatgutrohr fällt, hüpft es darin nach vorn und hinten. Das trifft insbesondere bei höheren Pflanzgeschwindigkeiten zu. Die Saatgutrohre sind nach hinten gekrümmt, was dem Saatgut einen nach hinten gerichteten Schub gibt, um der nach vorn gerichteten Geschwindigkeit des Pflanzgeräts entgegen zu wirken. Die Saatgutrohre sind entsprechend einem ausgewählten Bereich von Pflanzgeschwindigkeiten geschaffen; sie können nicht zur Anpassung an höhere Pflanzgeschwindigkeiten verstellt werden.

Das Messsystem der Fa. Kleine (EP 0 182 220 A) ist ein Versuch, diese Probleme dadurch zu lösen, dass das Saatgut beschleunigt wird, nachdem es zugemessen wurde, und dass das Saatgut vom Beschleuniger in die Säfurche abgelegt wird. Das Saatgut wird mittels eines Vakuums von einer mit Löchern versehenen, mittig angeordneten Scheibe festgehalten. Einzelne Saatgutkörner werden durch einen Abstreifer von der Scheibe abgelöst und in rotierenden Kammern, die als Beschleuniger wirken, nach außen gefördert, bis sie das Einzelkornsägerät an einem Abgabespalt verlassen. Als nachteilig ist dabei anzusehen, dass die Beschickung der Kammern mit dem Vakuumsystem relativ aufwändig ist.

In der US 3 773 224 A ist ein Messsystem beschrieben, das eine drehbare Scheibe mit Durchlasskanälen umfasst. Einzelne Saatgutkörner werden in die Kanäle abgegeben und am Auslass in Erdbodennähe aus ihrem Durchlasskanal herausgelassen. Der Transport des Saatguts erfolgt nur durch die Schwerkraft. Es ist somit denkbar, dass sich einzelne Saatgutkörner in den Durchlasskanälen oder an deren Ein-oder Auslässen festsetzen.

In der US 3 731 842 A wird vorgeschlagen, unter Druck stehende Luft zu verwenden, um Saatgut abzumessen und es in individuelle Durchlässe zu treiben.

Die der Erfindung zugrunde liegende Aufgabe wird darin gesehen, ein verbessertes Messsystem bereitzustellen, das die genannten Nachteile nicht aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird ein Messsystem vorgeschlagen, das ein stationäres Gehäuse, eine sich in axialer Richtung erstreckende Ausgabekante und eine rotierende Scheibe aufweist. Das stationäre Gehäuse ist mit einer sich in axialer Richtung erstreckenden Zumesskante versehen. Die Zumesskante weist eine Saatgutzumesslücke auf. Die stationäre, sich axial erstreckende Ausgabekante ist radial außerhalb der Zumesskante angeordnet und mit einer Saatgutausgabelücke versehen. Die rotierende Scheibe ist mit einem inneren Bereich, der um ihren Umfang verteilte Saatguttaschen aufweist, und einem äußeren Bereich versehen, der Saatgutausgabeöffnungen aufweist. Jeder Saatguttasche ist eine Saatgutausgabeöffnung zugeordnet. Durchlässe erstrecken sich zwischen den Saatguttaschen und den Saatgutausgabeöffnungen. Die Saatguttaschen des inneren Bereichs sind der Zumesskante benachbart und ihnen gegenüber nach innen versetzt angeordnet. Die Zumesskante unterbindet eine radiale Abgabe von Saatgut aus den Saatguttaschen bis eine Saatguttasche mit der Saatgutzumesslücke ausgerichtet ist. Die Saatgutausgabeöffnungen sind der Ausgabekante benachbart, ihnen gegenüber jedoch radial nach innen versetzt angeordnet, so dass die Ausgabekante eine Abgabe von Saatgut radial nach außen verhindert. Wenn eine Saatguttasche mit der Saatgutzumesslücke ausgerichtet ist, treiben die Zentrifugalkraft und ein zusätzlicher Luftdruck das Saatgut durch den Durchlass nach außen zur Saatgutausgabeöffnung. An der Saatgutausgabeöffnung wird das Saatgut durch die Zentrifugalkraft der rotierenden Scheibe und durch den Luftdruck festgehalten (gegen die Ausgabekante gedrückt), bis es die Saatgutausgabelücke erreicht.

Wenn das Saatgut an der Saatgutausgabelücke freigegeben wird, bewegt es sich in die Säfurche.

Auf diese Weise erreicht man durch einfache Mittel eine problemlose Beschleunigung des Saatguts. Es kann mit höheren Geschwindigkeiten und gleichmäßigerem Abstand gesät werden.

Vorzugsweise ist eine Druckluftquelle vorgesehen, die einen Luftstrom erzeugt, der das Saatgut in die Saatguttaschen und durch den Durchlass nach außen fördert. Die Druckluftquelle kann einen Überdruck bereitstellen, um das Saatgut zu fördern und/oder einen Unterdruck, um es anzusaugen.

Das stationäre Gehäuse, in dem die Saatgutaufnahmetaschen rotieren und Saatgut aufnehmen und das die Zumesskante mit der Saatgutzumesslücke aufweist, kann durch eine Saatgutöffnung mit Saatgut aus einem Vorratsbehälter beaufschlagt werden.

Wird die Förderung des Saatguts durch Druckluft unterstützt, bietet es sich an, das Gehäuse mit einer entsprechenden Belüftungsöffnung auszustatten, durch die das Gehäuse mit Druckluft beaufschlagt wird.

Die Förderung des Saatguts in die Saatguttaschen hinein kann durch Druckluft unterstützt werden, indem sie mit einem Luftableitweg versehen werden. Ebenso können Luftableitwege in den Saatgutausgabeöffnungen vorgesehen sein.

Zur Herstellung einer mechanischen Verbindung zwischen der Ausgabekante und dem stationären Gehäuse kann ein sich radial erstreckender Flansch vorgesehen sein. Das Saatgut bewegt sich dann zwischen dem stationären Flansch und der rotierenden Scheibe in den Durchlässen. In der dargestellten Ausführungsform ist der Flansch mit dem stationären Gehäuse und der stationären Ausgabekante fest verbunden, jedoch könnte er auch mit der rotierenden Scheibe verbunden sein.

Die Durchlässe können durch eine Rinne gebildet werden, die sich zwischen dem Flansch und der rotierenden Scheibe befindet. Die Durchlässe bzw. Rinnen können sich insbesondere in mit der Scheibe verbundenen Speichen befinden.

Vorzugsweise befindet sich die Zumesslücke in der oberen Hälfte der Zumesskante, während sich die Saatgutausgabelücke insbesondere in der unteren Hälfte der Ausgabekante befindet. Dadurch wird es möglich, das Saatgut von der Zumesslücke bezüglich der Vorwärtsbewegungsrichtung der Sämaschine nach oben und vorn abzugeben, während es in der Saatgutausgabelücke nach hinten und unten abgegeben wird, um die Säfurche zu erreichen.

In den Zeichnungen ist ein nachfolgend näher beschriebenes Ausführungsbeispiel der Erfindung dargestellt. Es zeigt:
- Fig. 1: eine Seitenansicht eines Reihenpflanzgeräts,

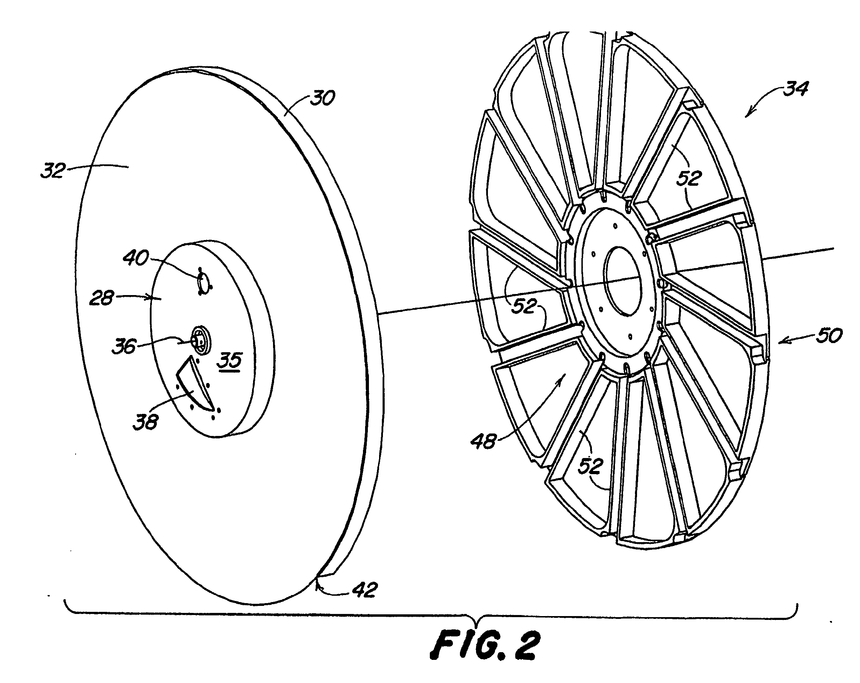

- Fig. 2: eine perspektivische Explosionszeichnung eines Messsystems,

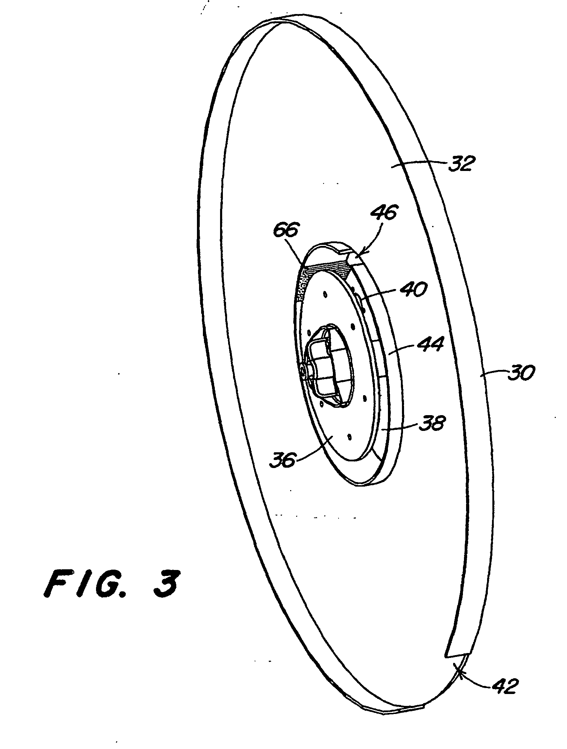

- Fig. 3: eine perspektivische Ansicht des stationären Gehäuses, des sich radial erstreckenden Flansches und der sich axial erstreckenden Ausgabekante,

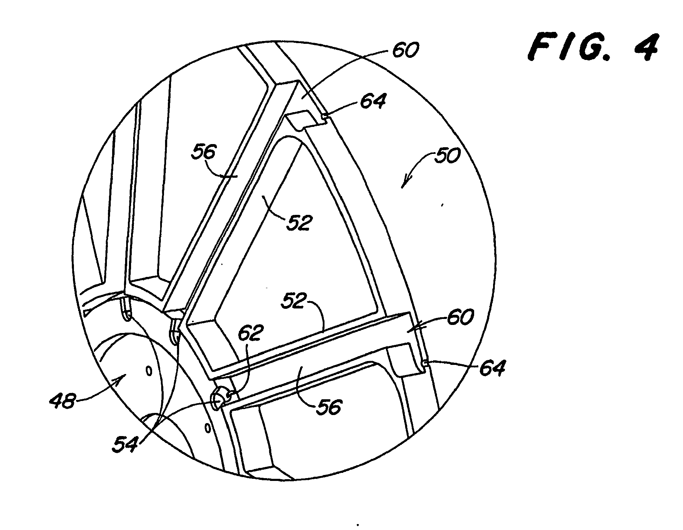

- Fig. 4: eine vergrößerte Teilansicht der rotierenden Scheibe, und

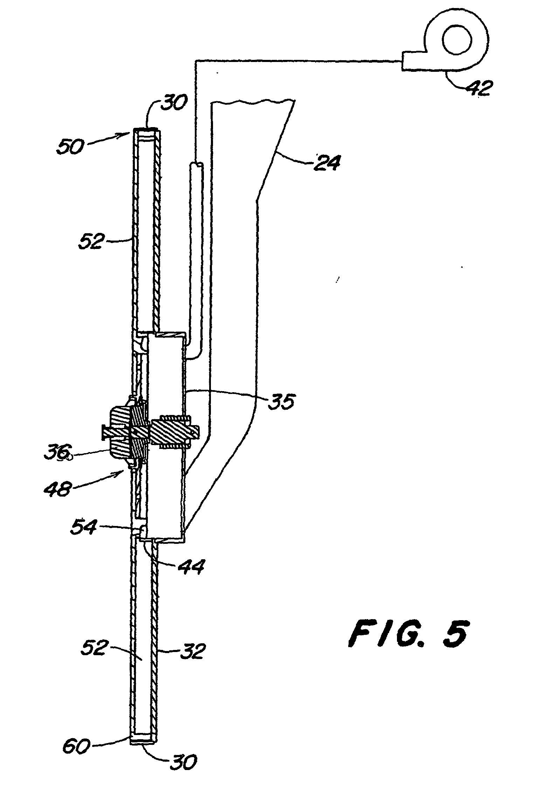

- Fig. 5: eine schematische Querschnittsansicht des Messsystems.

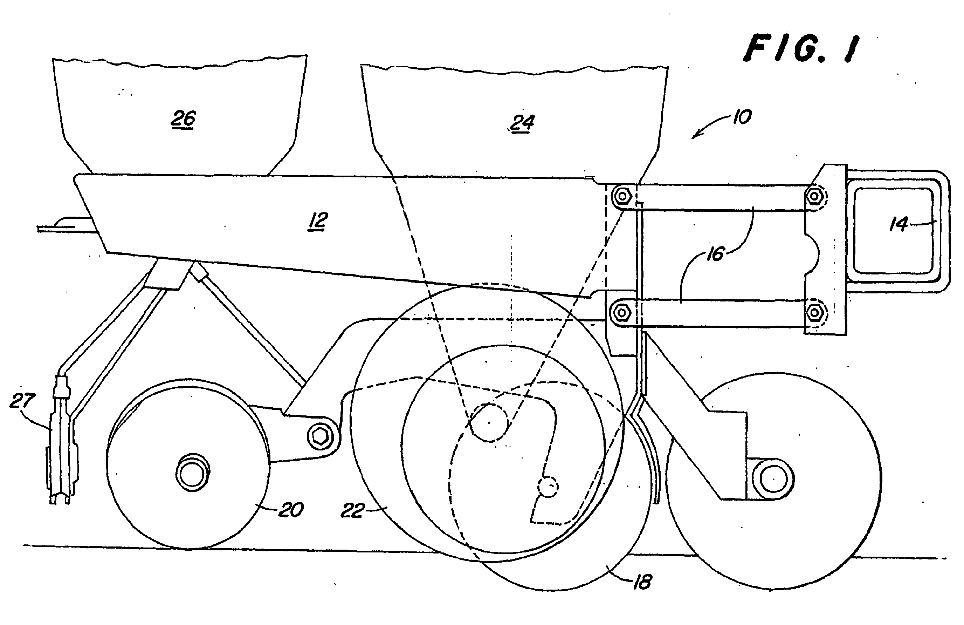

Die Figur 1 stellt eine Reihenpflanzeinheit 10 mit einem Rahmen 12 dar, der durch eine Parallelogrammverbindung 16 an einem Werkzeugträger 14 angebracht ist. Der Rahmen 12 ist mit einem Furchenöffner 18, um eine Säfurche zu formen, und mit Schließrädern 20 ausgestattet, um die vom Furchenöffner 18 hergestellte Säfurche zu schließen. Ein mit einem Beschleuniger versehenes Messsystem 22 ist oberhalb des und hinter dem Furchenöffner 18 angeordnet. Das mit dem Beschleuniger versehene Messsystem 22 gibt einen abgemessenen Betrag an Saatgut ab und beschleunigt ihn in die Säfurche. Ein Saatgutbehälter 24 ist oberhalb des Messsystems 22 angeordnet und stellt einen Vorrat an Saatgut bereit, der dem Messsystem zuführbar ist. Die Reihenpflanzeinheit 10 kann mit einem Chemikalienbehälter 26 ausgestattet sein, um eine Abgabeeinrichtung 27 zur Chemikalienanwendung während eines Pflanzvorgangs zu versorgen. Obwohl die vorliegende Erfindung als an einem Reihenpflanzgerät verwendet beschrieben wird, kann sie auch an anderen Sämaschinen, wie Drillmaschinen, benutzt werden.

Das mit dem Beschleuniger versehene Messsystem 22 umfasst ein stationäres Gehäuse 28, eine stationären, sich axial erstreckende Ausgabekante 30, einen sich radial erstreckenden Flansch 32 und eine kreisförmige rotierende Scheibe 34. Das stationäre Gehäuse 28 ist mit einer kreisförmigen Wand 35 ausgestattet, die eine Saatgutöffnung 38 und eine Belüftungsöffnung 40 aufweist. Die Saatgutöffnung 38 empfängt Saatgut vom Saatgutbehälter 24 und ermöglicht es dem Saatgut, das stationäre Gehäuse 28 zu durchlaufen und zur rotierenden Scheibe 34 zu gelangen. Die Belüftungsöffnung 40 ist mit einer Quelle unter Druck stehender Luft in Form eines Ventilators 42 verbunden, um Luftdruck in das Innere des stationären Gehäuses 28 zu übertragen. Eine zentrale Nabe 36 ist in der kreisförmigen Wand 35 drehbar befestigt und erstreckt sich durch das stationäre Gehäuse 28, in dem sie mit der rotierenden Scheibe 34 gekoppelt ist. Das stationäre Gehäuse 28 ist außerdem mit einer zylindrischen, sich axial erstreckenden Zumesskante 44 ausgestattet. Die Zumesskante 44 ist mit einer Saatgutzumesslücke 46 ausgestattet.

Die stationäre, sich axial erstreckende Ausgabekante 30 ist radial außerhalb des stationären Gehäuses 28 angeordnet. Die Ausgabekante 30 ist mit einer Saatgutausgabelücke 42 versehen.

Obwohl sich die Ausgabekante 30 um den Umfang des stationären Gehäuses 28 herum erstreckt, ist nur ein Teil der Ausgabekante 30 nötig. Im Einzelnen braucht sich die Ausgabekante 30 nur in dem Bereich um den Umfang zu erstrecken, der sich von der Saatgutausgabelücke 42 im Uhrzeigersinn zum Freigabepunkt für das Saatgut, der nahe des Bodens des mit Beschleuniger versehenen Messsystems 22 liegt, erstreckt.

In der dargestellten Ausführungsform ist der sich radial erstreckende Flansch 32 vollständig am stationären Gehäuse 28 und an der Ausgabekante 30 befestigt. Der sich radial erstreckende Flansch 32 könnte jedoch auch vollständig an der rotierenden Scheibe 34 befestigt sein. Dann würde die Abgabekante 30 vom Flansch 32 getrennt an der Reihenpflanzeinheit 10 befestigt sein.

Die rotierende Scheibe 34 ist mit der mittigen Nabe 36 gekoppelt, um gemeinsam mit ihr zu rotieren. Die rotierende Scheibe 34 hat einen inneren Bereich 48 und einen äußeren Bereich 50, der durch eine Reihe von Speichen 52 an den inneren Bereich 48 gekoppelt ist. Der innere Bereich 48 ist mit einer Reihe um den Umfang angeordneter Saatguttaschen 54 ausgestattet, um individuelle Saatgutkörner aus dem Saatgutbehälter 24 durch die Saatgutöffnung 38, die im stationären Gehäuse 28 angeordnet ist, aufnehmen zu können. Die Saatguttaschen 54 sind in der Nähe der Zumesskante 44 und ihr gegenüber radial nach innen versetzt angeordnet. Die Zumesskante 44 verhindert, dass einzelne, in den Saatguttaschen 54 angeordnete Saatgutkörner radial nach außen freigegeben werden, außer wenn die Saatguttasche 54 mit der Saatgutzumesslücke 46 ausgerichtet ist. Von der Saatgutzumesslücke 46 freigegebenes Saatgut bewegt sich vom inneren Bereich 48 durch einen Durchlass 56 nach außen. Die Durchlässe 56 sind durch in den Speichen 52 geformte Rinnen 58 gebildet und durch den sich radial erstreckenden Flansch 32 geschlossen. Jeder Durchlass 56 endet in einer Saatgutausgabeöffnung 60. Die Saatgutausgabeöffnungen 60 sind in der Nähe der Ausgabekante 30 und ihm gegenüber radial nach innen versetzt angeordnet. Die Ausgabekante 30 verhindert, dass Saatgut aus der Saatgutausgabeöffnung 60 radial nach außen freigegeben wird. Wenn die Saatgutausgabeöffnung 60 mit der Saatgutzumesslücke 46 ausgerichtet ist, wird das Saatgut in die Säfurche freigegeben.

Das Saatgut wird durch eine Druckluftquelle in die Saatguttaschen 54 und durch die Durchlässe 56 getrieben. In der dargestellten Ausführungsform ist die Druckluftquelle ein Gebläse 42. Der positive Luftdruck (Überdruck) vom Gebläse 42 setzt das Messsystem 22 unter Druck. Jede der Saatguttaschen 54 ist mit einem Luftableitweg in Form einer Aussparung 62 ausgestattet, so dass der Luftstrom durch diese Aussparung 62 einzelne Saatgutkörner in die einzelnen Saatguttaschen 54 anzieht. In ähnlicher Weise ist jede der Saatgutausgabeöffnungen 60 ebenfalls mit einem Luftableitweg in Form einer Aussparung 64 ausgestattet, um das Saatgut in den einzelnen Öffnungen fest zu halten. Zusätzlich zwingt der Luftstrom in den Durchlässen 56 das Saatgut vom stationären Gehäuse 28 radial nach außen.

Die Drehung des mit Beschleuniger versehenen Messsystems 22 bringt ebenfalls einen zentrifugalen Beitrag zu dieser nach außen gerichteten Bewegung des Saatguts in den Durchlässen 56.

Die dargestellte Ausführungsform der vorliegenden Erfindung verwendet einen durch ein Gebläse 42 erzeugten positiven Luftdruckunterschied, um das Saatgut in die Saatguttaschen 54 zu drücken. Eine negativer Luftdruckunterschied in Form eines Vakuums könnte auch benutzt werden, um das Saatgut in die Taschen 54 und durch die Durchlässe 56 zu ziehen. Es wäre auch denkbar, dass ein Luftdruckunterschied, ob positiv oder negativ, nicht unbedingt erforderlich ist, so dass allein die Zentrifugalkraft verwendet werden könnte, um das Saatgut in die Saatguttaschen 54 und durch die Durchlässe 56 zu treiben.

Das stationäre Gehäuse 28 ist mit einer Vereinzelungseinrichtung 66 zur Eliminierung doppelter Saatgutkörner in den Saatguttaschen 54 ausgestattet. In der dargestellten Ausführungsform ist die Vereinzelungseinrichtung eine Bürste, es könnten jedoch auch andere Vereinzelungseinrichtungen wie Kämme und flexible Leisten verwendet werden.

## Patentansprüche

1. Messsystem (22), mit einem stationären Gehäuse (28), das eine sich axial erstreckende Zumesskante (44) mit einer Saatgutzumesslücke (46) aufweist, einer stationären, sich axial erstreckenden Ausgabekante (30), die radial außerhalb des stationären Gehäuses (28) angeordnet ist und eine Saatgutausgabelücke (42) aufweist, sowie einer dem stationären Gehäuse (28) benachbart angeordneten rotierenden Scheibe (34), die einen inneren Bereich (48) und einen äußeren Bereich (50) aufweist, wobei der innere Bereich (48) Saatguttaschen (54) zur Aufnahme einzelner Saatgutkörner aufweist, welche in der Nähe der Zumesskante (44) und ihr gegenüber radial nach innen versetzt angeordnet sind, so dass die Zumesskante (44) eine radiale Freigabe von Saatgut verhindert und die Saatgutzumesslücke (46) eine radiale Abgabe von Saatgut ermöglicht, und wobei der äußere Bereich (50) der rotierenden Scheibe (34) Saatgutausgabeöffnungen (60) zum Freigeben von Saatgut aufweist, wobei die Saatgutausgabeöffnungen (60) in der Nähe der Ausgabekante (30) und ihr gegenüber radial nach innen versetzt sind, so dass die Ausgabekante (30) eine radiale Freigabe von Saatgut verhindert und die Saatgutausgabelücke (42) eine radiale Abgabe von Saatgut ermöglicht, wobei jede Saatguttasche (54) mit je einer der Saatgutausgabeöffnungen (60) durch einen Durchlass (56) verbunden ist, **gekennzeichnet durch** eine einen Überdruck bereitstellende Druckluftquelle, die das Saatgut in die Saatguttaschen (54) und **durch** den Durchlass (56) nach außen zur Saatgutausgabeöffnung (60) treibt.

2. Messsystem (22) nach Anspruch 1, **dadurch gekennzeichnet, dass** das stationäre Gehäuse (28) eine Saatgutöffnung (38) aufweist, durch die dem inneren Bereich der rotierenden Scheibe (34) Saatgut zugeführt wird.

3. Messsystem (22) nach Anspruch 2, **dadurch gekennzeichnet, dass** das stationäre Gehäuse (28) zum Beaufschlagen mit Überdruck von der Druckluftquelle mit einer Belüftungsöffnung (40) versehen ist

4. Messsystem (22) nach einem der Ansprüche 1 bis 3, **dadurch gekennzeichnet, dass** die Saatguttaschen (54) mit einem Luftableitweg ausgestattet sind.

5. Messsystem (22) nach einem der Ansprüche 1 bis 4, **dadurch gekennzeichnet, dass** die Saatgutausgabeöffnungen (60) mit einem Luftableitweg ausgestattet sind.

6. Messsystem (22) nach einem der Ansprüche 1 bis 5, **dadurch gekennzeichnet, dass** sich ein radial erstreckender Flansch (32) zwischen dem stationären Gehäuse (28) und der Ausgabekante (30) erstreckt.

7. Messsystem (22) nach Anspruch 6, **dadurch gekennzeichnet, dass** die Durchlässe (56) durch eine Rinne (58) in der rotierenden Scheibe (34) und den Flansch (32) gebildet werden.

8. Messsystem (22) nach einem der Ansprüche 1 bis 7, **dadurch gekennzeichnet, dass** die rotierende Scheibe (34) mit Speichen (52) versehen ist, die sich vom inneren Bereich (48) zum äußeren Bereich (50) erstrecken, wobei die Durchlässe (56) den Speichen (52) entsprechen.

9. Messsystem (22) nach einem der Ansprüche 1 bis 8, **dadurch gekennzeichnet, dass** die Zumesskante (44) und die Ausgabekante (30) jeweils eine untere und eine obere Hälfte aufweisen, wobei die Saatgutzumesslücke (46) in der oberen Hälfte der Zumesskante (44) und/oder die Saatgutausgabelücke (42) in der unteren Hälfte der Ausgabekante (30) vorgesehen ist.

10. Messsystem (22) nach Anspruch 9, **dadurch gekennzeichnet, dass** das von der Zumesskante (44) abgemessene Saatgut nach vorn und oben abgegeben wird, und/oder dass das durch die Saatgutabgabelücke (42) abgegebene Saatgut nach unten und hinten abgegeben wird.

## Claims

1. Metering system (22), comprising:
- a stationary housing (28) which has an axially extending metering rim (44) provided with a seed metering gap (46),
- a stationary, axially extending dispensing rim (30) which is arranged radially outside the stationary housing (28) and has a seed dispensing gap (42), as well as
- a rotating disc (34) which is arranged adjacent to the stationary housing (28) and has an inner region (48) and an outer region (50), the inner region (48) having seed pockets (54) for receiving individual seeds, said seed pockets being arranged close to and offset radially inward from the metering rim (44), such that the metering rim (44) prevents the radial release of seed and the seed metering gap (46) makes possible the radial dispensing of seed, and the outer region (50) of the rotating disc (34) having seed dispensing openings (60) for releasing seed, the seed dispensing openings (60) being arranged close to and offset radially inward from the dispensing rim (30), such that the dispensing rim (30) prevents the radial release of seed and the seed dispensing gap (42) makes possible the radial dispensing of seed, each seed pocket (54) being connected to one of the seed dispensing openings (60) by a passage (56), **characterised by** a source of compressed air providing excess pressure and driving the seed into the seed pockets (54) and outwards through the passage (56) to the seed dispensing opening (60).

2. Metering system (22) according to claim 1, **characterised in that** the stationary housing (28) has a seed aperture (38) through which seed is fed to the inner region of the rotating disc (34).

3. Metering system (22) according to claim 2, **characterised in that** the stationary housing (28) is provided with a ventilation aperture (40) for applying excess pressure from the source of compressed air.

4. Metering system (22) according to one of claims 1 to 3, **characterised in that** the seed pockets (54) are provided with an air leakage path.

5. Metering system (22) according to one of claims 1 to 4, **characterised in that** the seed dispensing openings (60) are provided with an air leakage path.

6. Metering system (22) according to one of claims 1 to 5, **characterised in that** a radially extending flange (32) extends between the stationary housing (28) and the dispensing rim (30).

7. Metering system (22) according to claim 6, **characterised in that** the passages (56) are formed by a groove (58) in the rotating disc (34) and the flange (32).

8. Metering system (22) according to one of claims 1 to 7, **characterised in that** the rotating disc (34) is provided with spokes (52) which extend from the inner region (48) to the outer region (50), the passages (56) corresponding to the spokes (52).

9. Metering system (22) according to one of claims 1 to 8, **characterised in that** the metering rim (44) and the dispensing rim (30) each have a lower half and an upper half, the seed metering gap (46) being provided in the upper half of the metering rim (44) and/or the seed dispensing gap (42) being provided in the lower half of the dispensing rim (30).

10. Metering system (22) according to claim 9, **characterised in that** the seed metered by the metering rim (44) is released forwards and upwards, and/or **in that** the seed released through the seed dispensing gap (42) is released downwards and towards the rear.

## Revendications

1. Système de mesure (22), comportant un boîtier stationnaire (28), qui comporte un bord de dosage (44) orienté dans le sens axial et muni d'une fente de dosage des semences (46), un bord de distribution (30) stationnaire, qui est orienté dans le sens axial et qui est agencé dans le sens radial à l'extérieur du boîtier stationnaire (28) et est muni d'une fente de distribution des semences (42), ainsi qu'un disque (34), qui est monté rotatif à proximité du boîtier stationnaire (28) et qui comporte une zone intérieure (48) et une zone extérieure (50), la zone intérieure (48) comportant des poches pour semences (54), qui sont destinées à recevoir les graines de semences individualisées et qui sont agencées à proximité du bord de dosage (44) et sont décalées dans le sens radial vers l'intérieur par rapport à celui-ci, de telle sorte que le bord de dosage (44) empêche une libération radiale des semences, et la zone extérieure (50) du disque rotatif (34) étant munie d'orifices de distribution des semences (60) pour libérer les semences, les orifices de distribution des semences (60) étant réalisés à proximité du bord de distribution (30) et étant décalés dans le sens radial vers l'intérieur par rapport à celui-ci, de telle sorte que le bord de distribution (30) empêche une libération radiale des semences et la fente de distribution des semences (42) permet une distribution radiale des semences, chaque poche pour semences (54) étant reliée à l'un des orifices de distribution des semences (60) par l'intermédiaire d'un passage (56), **caractérisé par** une source d'air comprimé foumissant une surpression qui pousse les semences dans les poches pour semences (54), puis à travers le passage (56) vers l'extérieur vers l'orifice de distribution des semences (60).

2. Système de mesure (22) selon la revendication 1, **caractérisé en ce que** le boîtier stationnaire (28) comporte une ouverture pour semences (38) à travers laquelle les semences sont acheminées vers la zone intérieure du disque rotatif (34).

3. Système de mesure (22) selon la revendication 2, **caractérisé en ce que** le boîtier stationnaire (28) est muni d'une ouverture d'aération (40) en vue d'être sollicité par une surpression générée par la source d'air comprimé.

4. Système de mesure (22) selon l'une quelconque des revendications 1 à 3, **caractérisé en ce que** les poches pour semences (54) sont munies d'un trajet de déviation de l'air.

5. Système de mesure (22) selon l'une quelconque des revendications 1 à 4, **caractérisé en ce que** les orifices de distribution des semences (60) sont munis d'un trajet de déviation de l'air.

6. Système de mesure (22) selon l'une quelconque des revendications 1 à 5, **caractérisé en ce qu'**une flasque (32), orientée dans le sens radial, s'étend entre le boîtier stationnaire (28) et le bord de distribution (30).

7. Système de mesure (22) selon la revendication 6, **caractérisé en ce que** les passages (56) sont formés par une cannelure (58) dans le disque rotatif (34) et la flasque (32).

8. Système de mesure (22) selon l'une quelconque des revendications 1 à 7, **caractérisé en ce que** le disque rotatif (34) est muni de rayons (52), qui s'étendent depuis la zone intérieure (48) vers la zone extérieure (50), les passages (56) correspondant aux rayons (52).

9. Système de mesure (22) selon l'une quelconque des revendications 1 à 8, **caractérisé en ce que** le bord de dosage (44) et le bord de distribution (30) comportent chacun une moitié inférieure et une moitié supérieure, la fente de dosage des semences (46) étant prévue dans la moitié supérieure du bord de dosage (44) et/ou la fente de distribution des semences (42) étant prévue dans la moitié inférieure du bord de distribution (30).

10. Système de mesure (22) selon la revendication 9, **caractérisé en ce que** les semences mesurées par le bord de dosage (44) sont distribuées vers l'avant et le haut, et/ou **en ce que** les semences distribuées à travers la fente de distribution des semences (42) sont distribuées vers le bas et l'arrière.
